# EUROPEAN PATENT SPECIFICATION

(11) **EP 3 159 197 B1**
(45) Date of publication and mention of the grant of the patent: **04.12.2019**
(21) Application number: 15190877.9
(22) Date of filing: 21.10.2015
(51) Int. Cl.: B60H 1/00

(54) **VALVE ELEMENT OF A VALVE ARRANGEMENT**
KLAPPENELEMENT EINER KLAPPENANORDNUNG
ÉLÉMENT DE CLAPET D'UN SYSTÈME DE CLAPET

(43) Date of publication of application: 26.04.2017
(73) Proprietor: Mahle International GmbH, 70376 Stuttgart (DE)
(72) Inventor: Miglionico, Mario Luigi, 8250 Mamer (LU); Le Henaff, Benoit, 6782 Habergy (BE)
(74) Representative: BRP Renaud & Partner mbB Rechtsanwälte Patentanwälte Steuerberater

(56) References cited:
- EP-A1- 1 479 547
- EP-A1- 2 433 826
- DE-A1-102013 225 204
- JP-A- H09 300 943
- JP-A- 2013 018 445
- US-A1- 2015 231 946
- US-B1- 6 386 966

## Description

The present invention relates to a valve element of a valve arrangement for the flow regulation of a fluid in a ventilation arrangement, according to the introductory clause of Claim 1. The invention further relates to a method for producing such a valve element and a casting mould used in such a method for producing such a valve element. The invention additionally relates to a valve arrangement with such a valve element and a ventilation arrangement with such a valve arrangement.

Ventilation arrangements serve for the feeding of a gas, in particular air, for example to a room. Such ventilation arrangements can serve in particular to air-condition the gas and can be constructed accordingly as an air-conditioning arrangement or as part of such an air-conditioning arrangement. Such ventilation arrangements can come into use in motor vehicles, in order for example to ventilate and/or air-condition an interior of the motor vehicle. Such ventilation arrangements, also designated HVAC systems (HVAC = heating, ventilation and air conditioning), direct here a flow which is regulated by means of at least one valve arrangement. For flow regulation, such valve arrangements usually have at least one valve element, which for example varies a cross-section, able to be flowed through, of an associated valve opening of the valve arrangement, in particular opens and closes the valve opening, in order to achieve said flow regulation.

In many such ventilation arrangements, audible noises and therefore sound occur in the region of the valve arrangement and/or caused by the valve arrangement. It is desirable here to regulate, in particular to reduce, the occurrence of noise within the ventilation arrangement and in particular in the region of the valve arrangement. For this, it is known to provide the valve arrangement, in particular such a valve element, with a sound-reducing foam material.

A disadvantage in the use of such foam materials is that moisture and other substances can collect therein, which can lead to a development of odour and/or the formation of noxious substances. This odour development is transported further in particular through the flow of the associated gas and therefore leads to a corresponding odour nuisance for users of the ventilation arrangement. Furthermore, said noxious substances can become admixed hereby in the flow, which can lead to a corresponding negative impairment to health.

In addition, such valve elements are usually produced from plastic. It is therefore necessary to fasten the sound-reducing foam material to the valve element. However, this requires an additional assembly step in the production of the valve element and therefore leads to an increased assembly duration and/or increased assembly costs. The mounting of the foam material on the valve element additionally takes place usually by the gluing of the foam material on the valve. This glued connection can become detached here during the operation of the associated ventilation arrangement, so that in particular the sound-reducing characteristic is lost or is at least reduced.

JP 2013 018 445 A discloses such a valve element produced by a casting method and comprising sound reduction elements projecting from its surface.

A similar valve element is shown in US 6,386,966 B1.

The present invention is therefore concerned with the problem of indicating improved or at least alternative embodiments for a valve element of such a valve arrangement and for such a valve arrangement and an associated ventilation arrangement and for a method for producing such a valve element and an associated casting mould for the production of the valve element in this method, which in particular feature an increased noise reduction achieved by the valve element.

This problem is solved according to the invention by the subjects of the independent claims. Advantageous embodiments are the subject of the dependent claims.

The present invention is based on the general idea of producing a valve element of a valve arrangement of a ventilation arrangement by a casting method and providing the valve element with a sound-reducing structure in the casting method. Therefore, the separate, subsequent provision of the valve element with a sound-reducing arrangement, in particular with foam material, can be dispensed with. Hereby, in particular reduced duration of manufacture and/or manufacturing costs arise. In addition, the sound-reducing structure is hereby applied securely and permanently on the valve element, in particular is constructed homogeneously as regards material with the valve element, so that the service life of the valve element is increased. Also, the sound-reducing structure according to the invention offers no or at least reduced deposition possibilities for moisture and/or other materials and/or substances, which lead to an odour development and therefore an odour nuisance and/or to adverse health effects. According to the idea of the invention, the valve element has a surface which has such a sound-reducing structure produced by the casting method. The sound-reducing structure comprises at least three, preferably a plurality of sound-reducing elements which are designated below as sound reduction elements. The sound reduction elements protrude from the surface and are dimensioned and/or spaced such that they lead to a reduction of the sound development in the associated ventilation arrangement and/or to a reduction of the sound which has developed in the associated ventilation arrangement. The sound-reducing structure with the sound reduction elements therefore leads in particular to a sound absorption.

The sound-reducing structure with its sound reduction elements is produced by the casting method. This means that the structure is produced from the same material as the valve element. In particular, the structure and the valve element are constructed homogeneously with regard to material, so that no subsequent mounting of the structure on the valve element is necessary. It is preferred here if the valve element is produced from a plastic, in particular as polypropylene, for example from PP40.

The sound-reducing structure and the sound reduction elements are dimensioned in particular such that they lead to a reduction of the audible sound. For this, the sound reduction elements have dimensions and distances between a few millimetres and several centimetres.

The valve element can basically be constructed as desired. A cross-section of an associated valve opening of the associated valve arrangement is varied here by means of the valve element, in order to regulate the flow of a fluid, for example a gas, in particular of air, flowing through the associated ventilation arrangement. It is conceivable here in particular that the valve element closes and exposes the valve opening. It is conceivable to construct the valve element as a flap.

The sound-reducing structure of the valve element is preferably provided on a windward side of the valve element, which in operation of the ventilation arrangement is exposed to the fluid generating the flow. Hereby, the sound reduction can take place particularly simply and effectively.

Basically, all sound reduction elements of the sound-reducing structure can be constructed identically and/or arranged equidistantly.

In preferred embodiments, at least two of the sound reduction elements have different heights, wherein the height runs transversely to the associated surface. Several such sound reduction elements can have the same height here, wherein this height differs from the height at least of one other such sound reduction element, in particular of several other sound reduction elements. Hereby, it is possible in particular to reduce and/or damp sound in different frequencies.

Embodiments are preferred, in which the sound reduction elements have different heights such that the structure is constructed as a Schroeder diffuser, in which different sound frequency ranges are reduced or respectively damped by different height- and depth variations.

The respective sound reduction element can basically have any desired shape, in so far as a sound-reducing effect can be achieved through the shape and/or dimension and/or arrangement of the sound reduction elements.

It is conceivable that at least one such sound reduction element has a cylindrical shape. This means that at least one such sound reduction element has a circular cross-section or respectively a circular base shape. The cylindrically constructed sound reduction element preferably extends here transversely to the surface, in particular such that the height of the cylinder corresponds to the height of the sound reduction element.

Embodiments are also to be considered, in which at least one such sound reduction element has a polyhedral shape. This means that at least one such sound reduction element has a four-sided base shape. Sound reduction elements with a rectangular, in particular square base shape are advantageous here. The polyhedrally shaped sound reduction elements preferably extend transversely to the surface.

In advantageous embodiments, at least one such sound reduction element has a pyramid-like shape. It is preferred here if the tip of the sound reduction element, which is constructed in a pyramid-like manner, points away from the surface of the valve element. The respective sound reduction element which is constructed in a pyramid-like manner can have in particular a triangular or four-sided base shape here.

In further embodiments, at least one such sound reduction element has a tetrahedron-like shape. Embodiments are preferred here in which at least one such sound reduction element constructed in a tetrahedron shape has a four-sided base shape, from which the sound reduction element protrudes such that the tip of the sound reduction element points away from the surface. It is conceivable here that a length of the sound reduction element running along the surface is greater than the height of the sound reduction element.

Of course, it is also possible to provide the sound-reducing structure with sound reduction elements of different shape and/or dimension. In particular, according to the invention, the structure has several structural sections, wherein in the respective structural section sound reduction elements are grouped.

According to the invention the structure has at least two such structural sections, wherein the respective structural section has a plurality of such sound reduction elements which have an identical orientation. The identical orientation of the respective sound reduction section can be achieved in that the sound reduction elements of the structural section have the same shape and/or size and/or are aligned identically. The orientation of such a structural section is different here to the orientation of another such structural section. In particular, the orientation of one such structural section can run in an inclined manner, for example transversely, to the orientation of another such structural section. By the provision of the structure with different structural sections, a particularly effective reduction of sound can be achieved. In particular, it is thereby possible to reduce or respectively damp sound in several frequency bands and/or in different frequency ranges. Hereby, also, the sound can be reduced in the case of flow from different directions, in particular independently of the flow direction.

The valve element according to the invention, as mentioned above, comes into use in a valve arrangement wherein the valve element cooperates with a valve opening of the valve arrangement, in order to regulate the flow of the fluid in the ventilation arrangement.

It is preferred here if the surface of the valve element which is provided with the sound-reducing structure faces away from the valve opening of the valve arrangement. It is also conceivable that the surface with the sound-reducing structure faces the valve opening. Hereby, the sound-reducing structure is exposed in particular to the flow, so that a more effective reduction of the sound is achieved.

Of course, a plurality of surfaces of the valve element can also be provided respectively with such a sound-reducing structure or with a shared such structure.

The ventilation arrangement according to the invention with the valve arrangement which has the valve element can come into use in any desired application. The ventilation arrangement can be used, for example, for air-conditioning the gas, in particular the air, and therefore can be constructed as an air-conditioning arrangement or part of such an air-conditioning arrangement. In particular, the ventilation arrangement can be constructed in the manner of an HVAC system.

It is conceivable in particular to use the ventilation arrangement in a motor vehicle. Here, the ventilation arrangement can come into use in particular for ventilation and/or for air-conditioning an interior of the motor vehicle.

The valve element is preferably produced by means of a casting mould which has a negative contour complementary to the sound-reducing structure, which leads to the formation of the sound-reducing structure during the casting method for producing the valve element.

The casting mould has here a casting chamber, into which the material forming the valve element, in particular plastic, is introduced during the casting method. Here, the negative contour of the casting mould, which forms the sound-reducing structure, faces the casting chamber.

It shall be understood that in addition to the valve element, the valve arrangement and the associated ventilation arrangement, the method for producing the valve element and the associated casting mould belong to the scope of this invention.

Further important features and advantages of the invention will emerge from the subclaims, from the drawings and from the associated figure description with the aid of the drawings.

It shall be understood that the features mentioned above and to be explained further below are able to be used not only in the respectively indicated combination, but also in other combinations or in isolation, without departing from the scope of the present invention.

Preferred example embodiments of the invention are illustrated in the drawings and are explained in further detail in the following description, wherein the same reference numbers refer to identical or similar or functionally identical components.

There are shown, respectively diagrammatically
- Fig. 1: a greatly simplified illustration, in the manner of a circuit diagram, of a motor vehicle with a ventilation arrangement,
- Fig. 2 and Fig. 3: a three-dimensional view of a valve arrangement with a valve element in different positions of the valve element,
- Fig. 4: an enlarged three-dimensional view of the valve element,
- Fig. 5: a three-dimensional view of the valve element in another example embodiment,
- Fig. 6: a three-dimensional view of a sound reduction element of the valve element of Fig. 5,
- Fig. 7: a three-dimensional view of the valve element in a further example embodiment,
- Fig. 8: a three-dimensional view of a sound reduction element of the valve element of Fig. 7,
- Fig. 9: a three-dimensional view of the valve element in a further example
embodiment, showing in particular the at least two structural sections according to the invention
- Fig. 10: a three-dimensional view of a sound reduction element of the valve element of Fig. 9,
- Fig. 11: a three-dimensional view of the valve element in a further example embodiment,
- Fig. 12: a section through a casting mould for the production of the valve element.

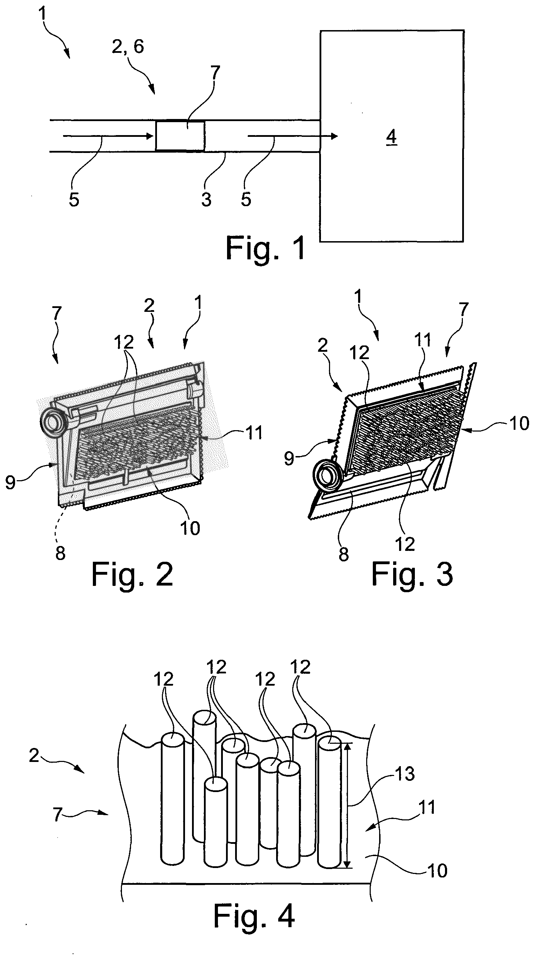

In Fig. 1 an illustration can be seen of a motor vehicle 1 in the manner of a circuit diagram. The motor vehicle 1 has a ventilation arrangement 2, which has a duct 3 directing a gas, in particular air. Air flows through the duct 3 during the operation of the ventilation arrangement 2, which air flows into an interior 4 of the motor vehicle 1. With the ventilation arrangement 2, therefore, a flow 5 of the gas arrives via the duct 3 into the interior 4. The ventilation arrangement 2 can be constructed as an air-conditioning arrangement 6, which regulates the temperature of the flow 5 of the gas by means of heat exchangers, which are not shown, and therefore air-conditions the interior 4. To regulate the flow 5 of the gas through the ventilation arrangement 2, the ventilation arrangement 2 has a valve arrangement 7 which, in the example shown, is arranged in the duct 3.

Fig. 2 and 3 show the valve arrangement 7 in two different positions. The valve arrangement 7 has a valve opening 8 which is able to be flowed through by the gas, such that the flow 5 passes through the valve opening 8. The valve arrangement 7 has, in addition, a valve element 9 cooperating with the valve opening 8. The valve element 9 is pivotably arranged on the valve arrangement 7 and is therefore pivotable relative to the valve opening 8. In Fig. 2, a closed position of the valve arrangement 7 is illustrated here, in which the valve element 9 closes the valve opening 8. Hereby, the flow 5 can not pass through the valve arrangement 7, so that the flow 5 of the gas through the ventilation arrangement 2 is interrupted. In Fig. 3 an open position of the valve arrangement 7 is shown, in which the valve element 9 exposes the valve opening 8 substantially entirely, so that the flow 5 arrives through the valve opening 8 and therefore through the duct 3.

In Fig. 2 and 3, it can be seen that the valve element 9 has a surface 10 (windward side) facing the valve opening 8 in the closed position and a further surface 10 (lee side) facing away from the valve opening 8 in the closed position. The respective surface 10 has here a sound-reducing structure 11. The respective sound-reducing structure 11 comprises a plurality of sound reduction elements 12, wherein the respective sound reduction element 12 protrudes from the associated surface 10. The valve element 9 is produced here by a casting method, in particular from plastic, wherein the structure 11 having the sound reduction elements 12 is produced by the casting method. This means, in particular, that the structure 11 with the sound reduction elements 12 and the valve element 9 are produced homogeneously as regards material, preferably from plastic.

In Fig. 4 an enlarged illustration of a cutout of the valve element 9 is shown. It can be seen here from Fig. 2 to 4 that the sound reduction elements 12 are arranged in an unordered or respectively irregular and non-homogeneous manner on the surface 10. In addition, the sound reduction elements 12 have respectively a cylindrical shape, in which the respective sound reduction element 12 protrudes perpendicularly from the surface 10. In addition, it can be seen that one height 13 of the sound reduction elements 12 running orthogonally to the surface 10 is different. This means that at least two of the sound reduction elements 12 have different heights 13. A distance between the sound reduction elements 12 along the surface 11 also varies, so that at least two sound reduction elements 12 which are nearest adjacent have different distances. The respective structure 11 with the sound reduction elements 12 leads here to a reduction or respectively damping of the sound occurring in the ventilation arrangement 2. A separate fastening of the respective structure 11 on the associated surface 10 of the valve element 9 is not necessary here, so that the production of the valve element 9 can take place in a simplified manner and the valve element 9 has an extended service life. Furthermore, the structure 11 offers comparatively few possibilities for the deposition of moisture and other substances, which in particular cause an odour development.

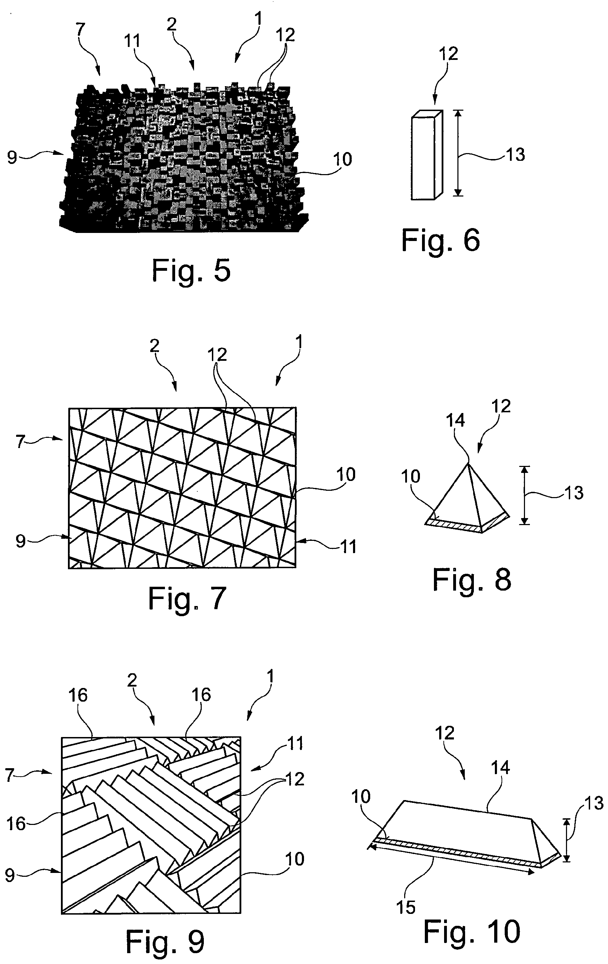

In Fig. 5 another example embodiment of the valve element 9 is illustrated, wherein Fig. 6 shows by way of example a sound reduction element 12 of the valve element 9 shown in Fig. 5. In this example embodiment, the sound-reducing structure 11 has such sound reduction elements 12 which have a polyhedral base shape, wherein in the example shown the sound reduction elements 12, as illustrated in particular in Fig. 6, have a four-sided, in particular square base shape. Here, the sound reduction elements 12 extend transversely to the surface 10 and therefore protrude from the surface 10. Also in this example embodiment, the sound reduction elements 12 in fact have the same shape, but sound reduction elements 12 with different heights 13 are provided.

In Fig. 7 a further example embodiment of the valve element 9 is illustrated, wherein in Fig. 8 such a sound reduction element 12 of the valve element 9 of Fig. 7 is shown by way of example. In this example embodiment, the structure 11 has uniformly distributed sound reduction elements 12, wherein the sound reduction elements 12 are constructed in an identical manner. Here, the respective sound reduction element 12 is constructed in a pyramid shape and has the same height 13. The sound reduction elements 12 constructed in a pyramid shape are arranged on the associated surface 10 such that a tip 14 of the sound reduction element 12 points away from the surface 10.

A further example embodiment of the valve element 9 is illustrated in Fig. 9. In this example embodiment, showing the at least two structural sections according to the invention, structure 11 has identically constructed sound reduction elements 12. In Fig. 10 such a sound reduction element 12 of the valve element 9 of Fig. 9 is illustrated by way of example. As can be seen in particular in Fig. 10, the sound reduction elements 12 are shaped in the manner of a tetrahedron, wherein they have a four-sided base shape and the tip 14 of the structural element 12 points away from the associated surface 10. In this example embodiment, the respective sound reduction element 12 has a length 15 running along the surface, which length is greater than the height 13 of the sound reduction element 12. Accordingly, these sound reduction elements 12 are constructed in an elongated manner.

In Fig. 9 it can be seen here that the structure 11 has a plurality of structural sections 16. In the respective structural section 16, sound reduction elements 12 are provided, running parallel here, so that the sound reduction elements 12 of the respective structural section 16 have the same orientation or respectively are identically oriented. In Fig. 9, it can be seen in addition that the nearest adjacent structural sections 16 have different orientations, wherein in the example shown the nearest adjacent structural sections 16 are oriented transversely to one another. Hereby, a particularly effective sound reduction or respectively sound damping can be achieved.

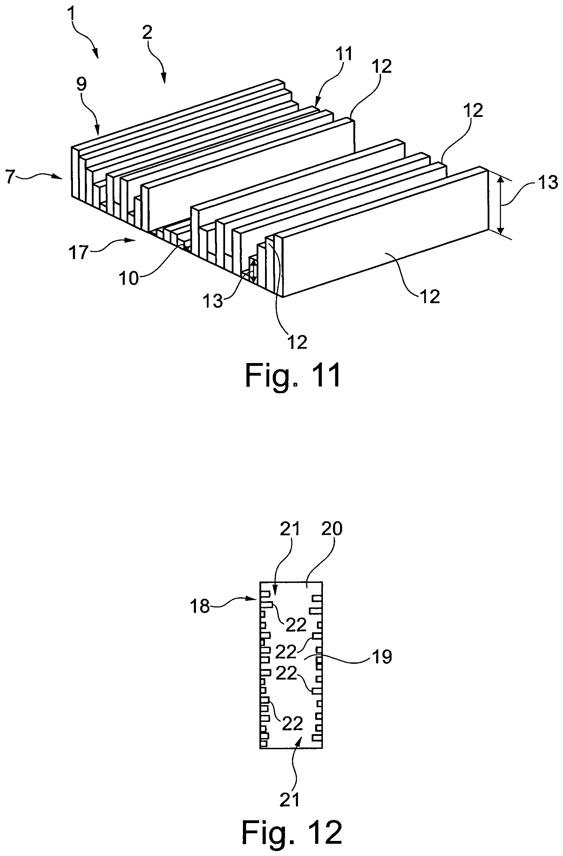

In Fig. 11 a further example embodiment of the valve element 9 is shown. The sound reduction elements 12 of this example embodiment have a polyhedral shape with a four-sided base shape and four-sided lateral faces. In the example shown, the base shape and the lateral faces are constructed rectangularly here.

As can be seen in Fig. 11, the heights 13 of the sound reduction elements 12 vary such that the sound-reducing structure 12 is constructed as a Schroeder diffuser 17. Through such a Schroeder diffuser 17, in particular different sound frequencies can be reduced or respectively damped effectively.

The valve element 9, as mentioned above, is produced by a casting method. For this, according to Fig. 12, a casting mould 18 comes into use, which has a casting chamber 19. The material, in particular plastic, forming the valve element 9 is cast into the casting chamber 19 for the production of the valve element 9. For this, the casting mould 19 has a corresponding casting opening 20, which is able to be closed. The casting mould 18 can be constructed in several parts or respectively can be composed of several parts. On the side facing the casting chamber 19, the casting mould 18 has a negative contour 21 complementary to the structure 11 which is to be formed, which negative contour 21 serves for the formation of the structure 11 with the structural elements 12. This means that the negative contour 21 in particular is constructed as a negative of the structure 11 with the structural elements 12. When the valve element 9 is provided on several surfaces 10 with such a sound-reducing structure 11, the casting mould can be provided with such a negative contour 21 on several sides facing the casting chamber 19. It means, overall, that the respective structure 11 is produced on the surface 10 during the casting method for producing the valve element 9 through the use of a corresponding such casting mould 18 with a suitable negative contour 21. Hereby, the valve element 9 and the structure 11 are constructed in particular homogeneously as regards material.

For the formation of the sound reduction elements 12, the respective negative contour 21 of the casting mould 18 has contour elements 22 protruding into the casting chamber 19, wherein the sound reduction elements 12 arise in the casting method through the shape and the distance between the contour elements 22 of the respective negative contour 21.

## Claims

1. A valve element (9) of a valve arrangement (7) for the flow regulation of a gas in a ventilation arrangement (2), in particular of a motor vehicle (1), wherein the valve element (9) is produced by a casting method, wherein a surface (10) of the valve element (9) has a sound-reducing structure (11) produced by the casting method, with at least three sound reduction elements (12), which protrude from the surface (10),
**characterized in that**
- the structure (11) has at least two structural sections (16),
- the respective structural section (16) has a plurality of such sound reduction elements (12), which have an identical orientation,
- the orientation of such a structural section (16) runs in an inclined manner, in particular transversely, to the orientation of another such structural section (16).

2. The valve element according to Claim 1,
**characterized in that**
at least two of the sound reduction elements (12) have a different height (13) running perpendicularly to the surface (10).

3. The valve element according to Claim 1 or 2,
**characterized in that**
at least one such sound reduction element (12) has a cylindrical shape.

4. The valve element according to one of Claims 1 to 3,
**characterized in that**
at least one such sound reduction element (12) has a polyhedral shape.

5. The valve element according to one of Claims 1 to 4,
**characterized in that**
at least one such sound reduction element (12) has a pyramid-like shape.

6. The valve element according to one of Claims 1 to 5,
**characterized in that**
at least one such sound reduction element (12) has a tetrahedral shape.

7. A method for the production of a valve element (9) according to one of Claims 1 to 6, with the method steps:
- providing a casting mould (18) with a casting chamber (19), into which a material forming the valve element (9) is introduced,
- using such a casting mould (18), which has on the side facing the casting chamber (19) a negative contour (21) delimiting the casting chamber (19) and reproducing the structure (11).

8. A casting mould (18) for the production of a valve element (9) in a method according to Claim 7, wherein the casting mould (18) has on the side facing the casting chamber (19) a negative contour (21) delimiting the casting chamber (19) for moulding the sound-reducing structure (11).

9. A valve arrangement (7) for the flow regulation of a gas in a ventilation arrangement (2), in particular in an air-conditioning arrangement (6), with a valve opening (8), able to be flowed through by the gas, and with a valve element (9) according to one of Claims 1 to 7 for varying a cross-section of the valve opening (8) which is able to be flowed through.

10. A ventilation arrangement (2) for guiding a flow (5) of a gas, in particular an air-conditioning arrangement (6), preferably in a motor vehicle (1), wherein the ventilation arrangement (2) has a valve arrangement (7) according to Claim 9 for the flow regulation of the gas.

## Patentansprüche

1. Ventilglied (9) einer Ventilanordnung (7) zur Strömungsregelung eines Gases in einer Lüftungsanordnung (2), insbesondere eines Kraftfahrzeugs (1), wobei das Ventilglied (9) durch ein Gussverfahren hergestellt ist, wobei eine Oberfläche (10) des Ventilglieds (9) eine durch ein Gussverfahren hergestellte schalldämmende Struktur (11) mit zumindest drei schalldämmenden Elementen (12), die von der Oberflüche (10) vorstehen, aufweist,
**dadurch gekennzeichnet, dass**
- die Struktur (11) zumindest zwei bauliche Abschnitte (16) aufweist,
- der jeweilige bauliche Abschnitt (16) eine Mehrzahl von solchen schalldämmenden Elementen (12) aufweist, die eine identische Ausrichtung aufweisen,
- die Ausrichtung solch eines baulichen Abschnitts (16) geneigt, insbesondere quer, zu der Ausrichtung eines anderen solchen baulichen Abschnitts (16) verläuft.

2. Ventilglied nach Anspruch 1,
**dadurch gekennzeichnet, dass**
zumindest zwei der schalldämmenden Elemente (12) verschiedene Höhen (13) aufweisen, die senkrecht zu der Oberfläche (10) verlaufen.

3. Ventilglied nach Anspruch 1 oder 2,
**dadurch gekennzeichnet, dass**
zumindest ein solches schalldämmendes Element (12) eine zylindrische Form aufweist.

4. Ventilglied nach einem der Ansprüche 1 bis 3,
**dadurch gekennzeichnet, dass**
zumindest ein solches schalldämmendes Element (12) eine polyedrische Form aufweist.

5. Ventilglied nach einem der Ansprüche 1 bis 4,
**dadurch gekennzeichnet, dass**
zumindest ein solches schalldämmendes Element (12) eine pyramidenartige Form aufweist.

6. Ventilglied nach einem der Ansprüche 1 bis 5,
**dadurch gekennzeichnet, dass**
zumindest ein solches schalldämmendes Element (12) eine tetraedrische Form aufweist.

7. Verfahren zur Herstellung eines Ventilglieds (9) nach einem der Ansprüche 1 bis 6, mit den Verfahrensschritten:
- Bereitstellen einer Gussform (18) mit einer Gusskammer (19), in die ein Material, das das Ventilglied (9) bildet, eingeführt wird,
- Verwenden solch einer Gussform (18), die auf der der Gusskammer (19) zugewandten Seite eine negative Kontur (21) aufweist, die die Gusskammer (19) begrenzt und die Struktur (11) reproduziert.

8. Gussform (18) zur Herstellung eines Ventilglieds (9) in einem Verfahren nach Anspruch 7, wobei die Gussform (18) auf der der Gusskammer (19) zugewandten Seite eine negative Kontur (21) aufweist, die zum Formen der schalldämmenden Struktur (11) die Gusskammer (19) begrenzt.

9. Ventilanordnung (7) zur Strömungsregelung eines Gases in einer Lüftungsanordnung (2), insbesondere in einer Klimaanlagenanordnung (6), mit einer von dem Gas durchströmbaren Ventilöffnung (8), und mit einem Ventilglied (9) nach einem der Ansprüche 1 bis 7 zum Verändern eines durchströmbaren Querschnitts der Ventilöffnung (8).

10. Lüftungsanordnung (2) zum Führen einer Strömung (5) eines Gases, insbesondere eine Klimaanlagenanordnung (6), vorzugsweise in einem Kraftfahrzeug (1), wobei die Lüftungsanordnung (2) eine Ventilanordnung (7) nach Anspruch 9 zur Strömungsregelung des Gases aufweist.

## Revendications

1. Elément de soupape (9) d'un agencement de soupape (7) pour la régulation d'écoulement d'un gaz dans un agencement de ventilation (2), en particulier d'un véhicule à moteur (1), dans lequel l'élément de soupape (9) est produit par un procédé de coulage, dans lequel une surface (10) de l'élément de soupape (9) présente une structure de réduction de son (11) produite par le procédé de coulage, avec au moins trois éléments de réduction de son (12) qui font saillie de la surface (10),
**caractérisé en ce que**
- la structure (11) présente au moins deux sections structurelles (16),
- la section structurelle respective (16) présente une pluralité d'éléments de réduction de son (12) qui présentent une orientation identique,
- l'orientation d'une telle section structurelle (16) s'étend de manière inclinée, en particulier transversalement, à l'orientation d'une autre telle section structurelle (16).

2. Elément de soupape selon la revendication 1,
**caractérisé en ce que**
au moins deux des éléments de réduction de son (12) présentent une hauteur différente (13) s'étendant perpendiculairement à la surface (10).

3. Elément de soupape selon la revendication 1 ou 2,
**caractérisé en ce que**
au moins un tel élément de réduction de son (12) présente une forme cylindrique.

4. Elément de soupape selon l'une des revendications 1 à 3,
**caractérisé en ce que**
au moins un tel élément de réduction de son (12) présente une forme polyèdre.

5. Elément de soupape selon l'une des revendications 1 à 4,
**caractérisé en ce que**
au moins un tel élément de réduction de son (12) présente une forme de pyramide.

6. Elément de soupape selon l'une des revendications 1 à 5,
**caractérisé en ce que**
au moins un tel élément de réduction de son (12) présente une forme tétraèdre.

7. Procédé pour la production d'un élément de soupape (9) selon l'une des revendications 1 à 6, avec les étapes de procédé :
- la dotation d'un moule de coulage (18) d'une chambre de coulage (19) dans laquelle un matériau formant l'élément de soupape (9) est introduit,
- l'utilisation d'un tel moule de coulage (18) qui présente sur le côté tourné vers la chambre de coulage (19) un contour négatif (21) délimitant la chambre de coulage (19) et reproduisant la structure (11).

8. Moule de coulage (18) pour la production d'un élément de soupape (9) dans un procédé selon la revendication 7, dans lequel le moule de coulage (18) présente sur le côté tourné vers la chambre de coulage (19) un contour négatif (21) délimitant la chambre de coulage (19) pour le moulage de la structure de réduction de son (11).

9. Agencement de soupape (7) pour la régulation d'écoulement d'un gaz dans un agencement de ventilation (2), en particulier dans un agencement de climatisation (6), avec une ouverture de soupape (8), apte à être traversée par le gaz, et avec un élément de soupape (9) selon l'une des revendications 1 à 7 pour varier une section transversale de l'ouverture de soupape (8) qui est apte à être traversée.

10. Agencement de ventilation (2) pour le guidage d'un écoulement (5) d'un gaz, en particulier un agencement de climatisation (6), de préférence dans un véhicule à moteur (1), dans lequel l'agencement de ventilation (2) présente un agencement de soupape (7) selon la revendication 9 pour la régulation d'écoulement du gaz.
